# EUROPÄISCHE PATENTSCHRIFT

(11) **EP 2 336 541 B1**
(45) Veröffentlichungstag und Bekanntmachung des Hinweises auf die Patenterteilung: **15.11.2017**
(21) Anmeldenummer: 10194333.0
(22) Anmeldetag: 09.12.2010
(51) Int. Cl.: F02M 37/08

(54) **Kraftstoffpumpe**
Fuel pump
Pompe à carburant

(30) Priorität: 16.12.2009 DE 102009058671; 14.01.2010 DE 102010004659
(43) Veröffentlichungstag der Anmeldung: 22.06.2011
(73) Patentinhaber: Continental Automotive GmbH, 30165 Hannover (DE)
(72) Erfinder: Graf, Rolf, 61479 Glashütten (DE)

(56) Entgegenhaltungen:
- EP-A2- 1 310 672
- EP-A2- 2 003 322
- DE-A1- 2 937 371
- DE-A1- 4 008 328
- DE-A1- 4 314 453
- JP-A- 2 159 940
- US-A- 4 998 865
- US-A1- 2006 292 913

## Beschreibung

Gegenstand der Erfindung ist eine Kraftstoffpumpe mit einem Gehäuse, wobei in dem Gehäuse mindestens eine Pumpstufe zum Fördern von Kraftstoff, ein Elektromotor, bestehend aus einem Stator und einem auf einer Welle angeordneten Rotor, wobei die Welle, die mindestens eine Pumpstufe antreibt und eine Pumpenelektronik zur Regelung der Kraftstoffpumpe angeordnet sind.

Kraftstoffpumpen werden in Kraftfahrzeugen zur Förderung von Kraftstoff aus einem Kraftstoffbehälter zu einer Brennkraftmaschine eingesetzt und sind seit langem bekannt. Um ein unnötiges Umwälzen von Kraftstoff zu vermeiden, werden elektronisch geregelte Kraftstoffpumpen eingesetzt, welche nur die jeweils benötigte Menge an Kraftstoff der Brennkraftmaschine zur Verfügung zu stellen. Es ist bekannt, die hierzu erforderliche Elektronik in dem Gehäuse der Kraftstoffpumpe anzuordnen. Die Elektronik ist dazu zwischen dem Elektromotor und dem Pumpenauslass, von dem aus der Kraftstoff über eine Vorlaufleitung zur Brennkraftmaschine geleitet wird, angeordnet. Bei dieser Anordnung wird die Elektronik vom vorbeiströmenden Kraftstoff gekühlt.

Um eine Schädigung von Elektronikbauteile durch aggressive Medien zu vermeiden, ist es bekannt, Elektronikbauteile in einem hermetisch dichten Gehäuse anzuordnen. Das Gehäuse besteht aus einem Deckel und einem Boden jeweils aus Metall. Deckel und Boden sind miteinander verlötet oder verschweißt. Zur Kontaktierung der Elektronik in dem Gehäuse besitzt der Boden Durchführungen, durch die die elektrischen Anschlüsse der Elektronik nach außen hindurchragen. Um ein Eindringen von aggressiven Medien durch die Durchführungen in das Innere des Gehäuses zu vermeiden, sind die Durchführungen mit den elektrischen Anschlüssen mit Glas gefüllt.

Derartige hermetische Abdichtungen eines Metallgehäuses einer Kraftstoffpumpe sind beispielsweise aus der US 4,998,865 oder der DE 43 14 453 A1 bekannt. Diese beschreibe die Verwendung von Glas oder Metall zur Abdichtung von Durchführungen.

Der Nachteil dieser Metall-Glas-Durchführungen besteht im Aufwand und den Kosten zur Herstellung der Abdichtung aufgrund der geforderten Genauigkeiten und der Herstellungsverfahren. Insbesondere führen die hohen Temperaturen beim Herstellen der Abdichtung zu Problemen, da die Temperaturverträglichkeit der Elektronikbauteile begrenzt ist. Des Weiteren besitzen Glas und Metall unterschiedliche Ausdehnungskoeffizienten, was über die Lebensdauer der Kraftstoffpumpe ebenfalls zu Problemen hinsichtlich Dichtheit führen kann. Zudem sind Glasdurchführungen spröde, was zu Handlingsproblemen führt.

Die DE 29 37 371 A1 beschreibt eine Kraftstoffförderpumpe, die gegenüber Spritzwasser mit einer Führungsbuchse aus Kunststoff abgedichtet ist.

Die DE 40 08 328 A1 beschreibt einen mehrphasigen Drehstrommotor, der Dichtungskörper aus einem elastischen Kunststoff aufweist.

Der Erfindung liegt daher die Aufgabe zugrunde eine Kraftstoffpumpe zu schaffen, deren Elektronik ausreichend vor Kraftstoff geschützt ist. Der Schutz der Elektronik sollte dabei in kostengünstiger Weise erreicht werden.

Erfindungsgemäß wird die Aufgabe mit einer Kraftstoffpumpe gemäß dem Anspruch 1 gelöst. Die Abdichtung mittels Kunststoff erreicht zwar eine geringere Dichtigkeit im Vergleich zu einer Abdichtung mittels Glas. Es hat sich jedoch gezeigt, dass die Elektronik auch dann zuverlässig und langzeitstabil arbeitet, wenn die Dichtigkeit des Metallgehäuses, in dem die Elektronik angeordnet ist, etwas geringer ist. So ist es möglich, dass bezogen auf die Betriebszeit eine geringe Menge Kraftstoff, überwiegend in Form von Kraftstoffdampf, in das Metallgehäuse eindringen kann. Diese geringe Menge ist jedoch nicht ausreichend, um die Pumpenelektronik, insbesondere die elektronischen Bauelemente und Verbindungen derart anzugreifen kann, dass es zu einem Ausfall der Pumpenelektronik kommt. Hinzu kommt, dass durch entsprechende Gestaltung und Anordnung der elektrischen Anschlüsse lediglich ca. 2% der Oberfläche des Metallgehäuses Bereiche mit geringerer Dichtigkeit sind. Die Verwendung von Kunststoff erlaubt somit die Verwendung eines günstigeren Dichtmaterials, welches neben seinen geringeren Kosten wesentlich einfacher zu verarbeiten ist. Diese Art der Abdichtung stellt daher eine besonders einfache und kostengünstige Form der Abdichtung dar.

Das Einbringen von Kunststoff als Dichtmaterial erfolgt zudem bei wesentlich geringeren Temperaturen als die mit einer Abdichtung mittels Glas der Fall wäre. Infolge der geringeren Temperaturbelastung kann die Abdichtung erfolgen, wenn die Pumpenelektronik bereits im Metallgehäuse angeordnet ist. Die einzelnen Bauelemente der Pumpenelektronik müssen nicht so hoch wärmebeständig sein, wodurch sich die Kosten für die Bauelemente und damit für die Pumpenelektronik reduzieren.

In einer vorteilhaften Ausgestaltung weist die Pumpenelektronik ein Substrat auf, auf dem die Bauteile der Pumpenelektronik angeordnet sind. Das Substrat besitzt Kontakte, die mit den elektrischen Anschlüssen verbunden sind. Dieser Aufbau ermöglicht es, die elektrischen Anschlüsse separat im Boden anzuordnen und abzudichten. Die elektrische Verbindung mit der Pumpenelektronik erfolgt erst zu dem Zeitpunkt, wenn diese im Metallgehäuse angeordnet wird. In einer besonders einfachen Ausgestaltung sind die Kontakte als das Substrat durchdringende Bohrungen ausgebildet.

In einer anderen Ausgestaltung sind die elektrischen Anschlüsse Bestandteil der Pumpenelektronik. Die Pumpenelektronik wird in das Metallgehäuse derart montiert, dass die elektrischen Anschlüsse durch die Öffnungen im Boden durchgesteckt werden. Anschließend erfolgt die Abdichtung mit dem Kunststoff. Anschlüsse und Öffnungen sind dabei derart aufeinander abgestimmt, dass jeweils ein elektrischer Anschluss in einer Öffnung angeordnet ist. Es ist aber auch möglich mehrere elektrische Anschlüsse durch eine Öffnung zu führen.

Die Abdichtung der elektrischen Anschlüsse gegenüber den Öffnungen im Boden lässt sich besonders einfach herstellen, wenn der Kunststoff mittels Spritzgießens eingebracht wird.

Für eine einfache Kontaktierung mit der Pumpenelektronik und/oder den elektrischen Anschlussleitungen für die Pumpenelektronik hat es sich als vorteilhaft erwiesen, wenn die elektrischen Anschlüsse eine die Dicke des Bodens übersteigende Länge aufweisen. Ein inniger Verbund zwischen dem Kunststoff und den elektrischen Anschlüssen lässt sich durch eine entsprechende Formgestaltung der elektrischen Anschlüsse erreichen. Ein axiales Verschieben der elektrischen Anschlüsse gegenüber dem Metallgehäuse wird zuverlässig verhindert, wenn die elektrischen Anschlüsse bezogen auf ihre Länge im Bereich des Bodens einen vergrößerten oder verminderten Querschnitt aufweisen. Diese Querschnittsänderungen erzeugen einen oder mehrere Hinterschnitte für den umgebenden Kunststoff, die eine axiale Verschiebung des jeweiligen elektrischen Anschlusses gegenüber dem Kunststoff der Abdichtung verhindern.

Für einen sicheren Halt der Kunststoffabdichtung gegenüber dem Boden ist erfindungsgemäß vorgesehen, dass die Öffnungen des Bodens jeweils von einer ringförmigen Prägung umgeben sind, wobei die Bereiche der ringförmigen Prägungen eine geringere Dicke als der Boden aufweisen und dass der Kunststoff bis in den Bereich der Prägung angeordnet ist. Aufgrund der geringeren Dicke des Bodens im Bereich der Prägung wird ebenfalls eine Art Hinterschnitt erzeugt, wodurch der umschließende Kunststoff an einer Bewegung gehindert wird. Die Prägung kann auch andere geometrische Ausbildungen aufweisen, beispielsweise oval oder rechteckig. Ebenso kann die geringere Dicke des Bodens durch andere Verfahren als Prägen, beispielsweise durch spanende Bearbeitung oder nichtspanende Bearbeitung, z.B. mittels Laser, erzeugt werden.

Eine hermetische Verbindung von Deckel und Boden des Metallgehäuses wird erreicht, wenn Deckel und Boden miteinander verschweißt, vorzugsweise durch Widerstandsschweißen, oder verlötet sind.

Eine geringere Temperaturbelastung beim Verbinden des Deckels und des Bodens des Metallgehäuses und somit eine geringere Temperaturbelastung für die Pumpenelektronik wird erreicht, wenn zur Verbindung des Deckels mit dem Boden beide mit Kunststoff umspritzt sind. Die Menge des benötigten Kunststoffs und damit auch die Temperaturbelastung lässt sich noch weiter reduzieren, wenn der Deckel und der Boden des Metallgehäuses lediglich in dem Bereich mit Kunststoff umspritzt sind, in dem sie aneinanderstoßen.

Die Umspritzung mit Kunststoff erlaubt darüber hinaus, bestimmt Formelemente wie Rasthaken oder Vorsprünge im gleichen Arbeitsgang anzuspritzen, welche zur Befestigung des Metallgehäuses in der Kraftstoffpumpe dienen.

An mehreren Ausführungsbeispielen wird die Erfindung näher erläutert. Es zeigen in
- Figur 1:: eine erfindungsgemäße Kraftstoffpumpe,
- Figur 2:: eine Schnittdarstellung des Metallgehäuses mit der Pumpenelektronik,
- Figur 3:: eine vergrößerte Darstellung eines elektrischen Anschlusses der Pumpenelektronik und
- Figur 4:: eine zweite Ausführungsform des Metallgehäuses.

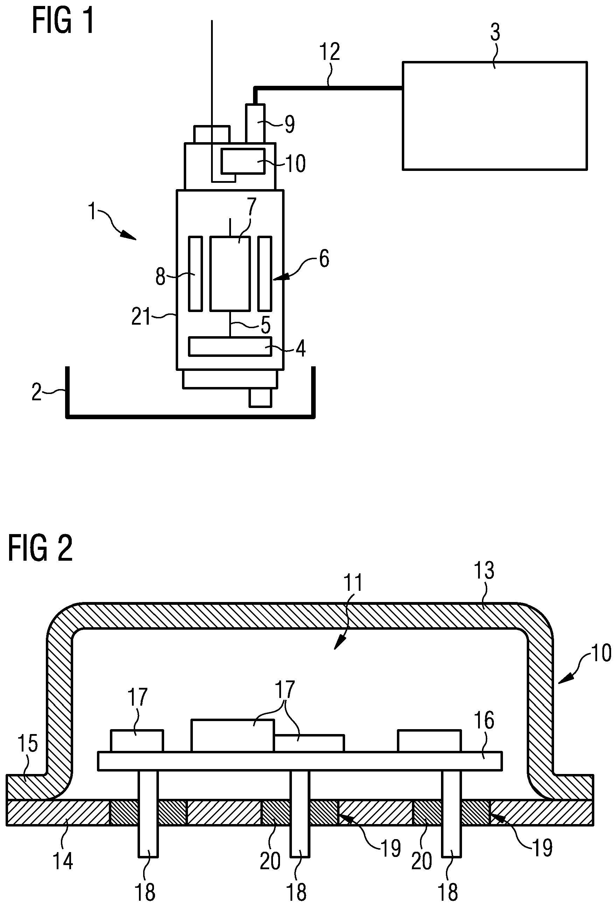

Figur 1 zeigt eine Kraftstoffpumpe 1 zum Fördern von Kraftstoff aus einem Kraftstoffbehälter 2 eines Kraftfahrzeuges zu einer Brennkraftmaschine 3. Die Kraftstoffpumpe 1 besitzt ein Gehäuse 21 in dem eine Pumpstufe 4 angeordnet ist. Die Pumpstufe 4 wird von einer Welle 5 eines Elektromotors 6 angetrieben. Auf der Welle 5 ist ein Rotor 7 angeordnet, der von einem Stator 8 umgeben ist. Der von der Pumpstufe 4 aus dem Kraftstoffbehälter 2 angesaugte Kraftstoff wird durch den Elektromotor 6 zu einem Auslass 9 gefördert, wobei der Kraftstoff nach dem Elektromotor 6 an einer in einem Metallgehäuse 10 angeordneten Pumpenelektronik 11 zur Regelung der Kraftstoffpumpe 1 vorbeiströmt. Vom Auslass 9 gelangt der Kraftstoff über eine Vorlaufleitung 12 zur Brennkraftmaschine 3. Das Metallgehäuse 10 in Figur 2 besteht aus einem Deckel 13 und einem Boden 14. Der Deckel 13 ist topfförmig mit einem umlaufenden Flansch 15 ausgebildet, wobei der Deckel 13 mit seinem Flansch 15 auf dem Boden 14 aufliegt. Deckel 13 und Boden 14 sind im Bereich des Flansches 15 miteinander verlötet, wodurch eine hermetische Abdichtung in diesem Bereich vorhanden ist. Im Innern des Metallgehäuses 10 befindet sich die Pumpenelektronik 11, welche aus einem Substrat 16 und darauf angeordneten elektronischen Bauelementen 17 besteht. Das Substrat 16 besitzt auf der den Bauelementen 17 abgewandten Seite des Substrats 16 mehrere Pins 18. Die Pins 18 sind elektrische Anschlüsse um die Pumpenelektronik 11 mit nicht näher dargestellten, außerhalb des Metallgehäuses 10 ankommenden Verbindungsleitungen oder Kontakten zu verbinden. Die als Pins 18 ausgebildeten elektrischen Anschlüsse durchdringen den Boden 14 des Metallgehäuses 10, wobei die Pins 18 in Öffnungen 19 im Boden 14 angeordnet sind. Die Öffnungen 19 haben einen größeren Durchmesser als die Pins 18. Der freie Zwischenraum ist mit spritzgegossenem Kunststoff 20 ausgefüllt.

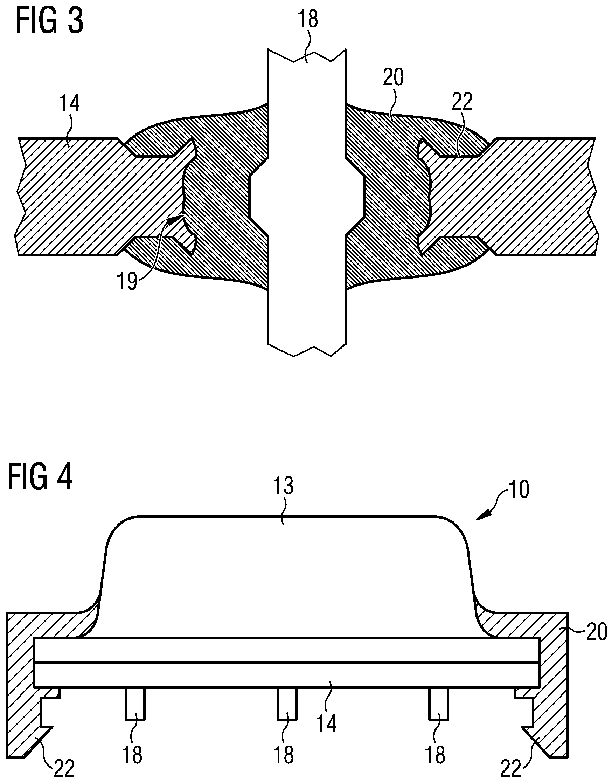

Der elektrische Anschluss 18 in Figur 3 besitzt im Bereich der Öffnung 19 einen vergrößerten Querschnitt. Der die Öffnung 19 ausfüllende Kunststoff 20 umgibt den elektrischen Anschluss 18 im Bereich des vergrößerten Querschnitts, wodurch der vergrößerte Querschnitt an seiner Ober- und Unterseite eine Art Hinterschnitt erzeugt, so dass ein axiales Verschieben des elektrischen Anschlusses 18 ausgeschlossen ist. Die Öffnungen 19 im Boden 14 sind jeweils von einer ringförmigen Prägung 22 umgeben sind, wobei die Bereiche der ringförmigen Prägungen 22 eine geringere Dicke als der Boden 14 aufweisen. Der die Öffnung 19 abdichtende Kunststoff 20 ist bis in den Bereich der Prägung 22 angeordnet, wobei sich aufgrund der geringeren Dicke der Prägung 22 im Vergleich zum Boden 14 wieder ein Hinterschnitt ergibt, so dass der Kunststoff 20 zuverlässig im Bereich der Öffnungen 19 gehalten wird.

In Figur 4 sind der Deckel 13 und der Boden 14 durch eine Umspritzung 20 aus Kunststoff miteinander verbunden, wobei die Umspritzung 20 auf den Bereich beschränkt ist, in dem sich Boden 14 und Deckel 13 berühren. An der Umspritzung 20 sind zwei Rasthaken 22 ausgeformt, die ein sicheres Befestigen des Metallgehäuses 10 in der Kraftstoffpumpe 2 ermöglichen.

## Patentansprüche

1. Kraftstoffpumpe mit einem Gehäuse (21), wobei in dem Gehäuse (21) mindestens eine Pumpstufe (4) zum Fördern von Kraftstoff, ein Elektromotor (6), bestehend aus einem Stator (8) und einem auf einer Welle (5) angeordneten Rotor (7), wobei die Welle (5), die mindestens eine Pumpstufe (4) antreibt und eine Pumpenelektronik (11) zur Regelung der Kraftstoffpumpe (1) angeordnet sind, wobei die Pumpenelektronik (11) in einem aus einem Boden (14) und einem Deckel (13) bestehendem Metallgehäuse (10) angeordnet ist, welches im Gehäuse (21) der Kraftstoffpumpe (1) angeordnet ist, wobei der Deckel (13) und der Boden (14) des Metallgehäuses (10) hermetisch miteinander verbunden sind, wobei der Boden (14) Öffnungen (19) besitzt, in denen elektrischen Anschlüsse (18) angeordnet sind, **dadurch gekennzeichnet, dass** die elektrischen Anschlüsse (18) gegenüber den Öffnungen (19) zum Schutz vor Kraftstoff mit Kunststoff (20) abgedichtet sind, wobei die Öffnungen (19) des Bodens (14) jeweils von einer ringförmigen Prägung (22) umgeben sind, wobei die Bereiche der ringförmigen Prägungen (22) eine geringere Dicke als der Boden (14) aufweisen und dass der Kunststoff (20) bis in den Bereich der Prägung (22) angeordnet ist.

2. Kraftstoffpumpe nach Anspruch 1, **dadurch gekennzeichnet, dass** die Pumpenelektronik (11) ein Substrat aufweist, auf dem die Bauteile der Pumpenelektronik (11) angeordnet sind, und dass die elektrischen Anschlüsse (18) mit dem Substrat verbunden sind.

3. Kraftstoffpumpe nach Anspruch 1, **dadurch gekennzeichnet, dass** die elektrischen Anschlüsse (18) Bestandteile der Pumpenelektronik (11) sind.

4. Kraftstoffpumpe nach zumindest einem der vorhergehenden Ansprüche, **dadurch gekennzeichnet, dass** in jeweils einer Öffnung (19) je ein elektrischer Anschluss (18) angeordnet ist.

5. Kraftstoffpumpe nach zumindest einem der vorhergehenden Ansprüche, **dadurch gekennzeichnet, dass** der Kunststoff (20), mit dem die elektrischen Anschlüsse (18) gegenüber den Öffnungen (19) abgedichtet sind, ein spritzgegossener Kunststoff ist.

6. Kraftstoffpumpe nach zumindest einem der vorhergehenden Ansprüche, **dadurch gekennzeichnet, dass** die elektrischen Anschlüsse (18) eine die Dicke des Bodens (14) übersteigende Länge aufweisen und bezogen auf ihre Länge im Bereich des Bodens (14) einen vergrößerten oder verminderten Querschnitt aufweisen.

7. Kraftstoffpumpe nach zumindest einem der vorhergehenden Ansprüche, **dadurch gekennzeichnet, dass** der Deckel (13) und der Boden (14) des Metallgehäuses (10) verlötet oder verschweißt sind.

8. Kraftstoffpumpe nach zumindest einem der vorhergehenden Ansprüche, **dadurch gekennzeichnet, dass** der Deckel (13) und der Boden (14) des Metallgehäuses (10) mit Kunststoff (2) umspritzt sind.

9. Kraftstoffpumpe nach Anspruch 8, **dadurch gekennzeichnet, dass** der Deckel (13) und der Boden (14) des Metallgehäuses (10) in dem Bereich, in dem sie aneinanderstoßen mit Kunststoff (20) umspritzt sind.

10. Kraftstoffpumpe nach Anspruch 8 oder 9, **dadurch gekennzeichnet, dass** die Umspritzung (21) mit Kunststoff (20) Rasthaken (22) oder Vorsprünge zur Befestigung des Metallgehäuses (10) besitzt.

## Claims

1. Fuel pump having a housing (21), wherein, in the housing (21), there are arranged at least one pump stage (4) for conveying fuel, an electric motor (6) composed of a stator (8) and a rotor (7) arranged on a shaft (5), wherein the shaft (5) drives the at least one pump stage (4), and pump electronics (11) for regulating the fuel pump (1), wherein the pump electronics (11) are arranged in a metal housing (10) composed of a base (14) and of a cover (13), which metal housing is arranged in the housing (21) of the fuel pump (1), wherein the cover (13) and the base (14) of the metal housing (10) are hermetically connected to one another, wherein the base (14) has openings (19) in which electrical connectors (18) are arranged, **characterized in that** the electrical connectors (18) are sealed off with respect to the openings (19) by means of plastic (20) for the purposes of protection against fuel, wherein the openings (19) of the base (14) are each surrounded by a ring-shaped embossment (22), wherein the regions of the ring-shaped embossments (22) have a smaller thickness than the base (14), and **in that** the plastic (20) is arranged as far as into the region of the embossment (22).

2. Fuel pump according to Claim 1, **characterized in that** the pump electronics (11) have a substrate on which the components of the pump electronics (11) are arranged, and **in that** the electrical connectors (18) are connected to the substrate.

3. Fuel pump according to Claim 1, **characterized in that** the electrical connectors (18) are constituent parts of the pump electronics (11).

4. Fuel pump according to at least one of the preceding claims, **characterized in that** in each case one electrical connector (18) is arranged in in each case one opening (19).

5. Fuel pump according to at least one of the preceding claims, **characterized in that** the plastic (20) by means of which the electrical connectors (18) are sealed off with respect to the openings (19) is an injection-moulded plastic.

6. Fuel pump according to at least one of the preceding claims, **characterized in that** the electrical connectors (18) have a length which exceeds the thickness of the base (14) and have an increased or reduced cross section in the region of the base (14) in relation to their length.

7. Fuel pump according to at least one of the preceding claims, **characterized in that** the cover (13) and the base (14) of the metal housing (10) are brazed or welded.

8. Fuel pump according to at least one of the preceding claims, **characterized in that** the cover (13) and the base (14) of the metal housing (10) are encapsulated with plastic (20).

9. Fuel pump according to Claim 8, **characterized in that** the cover (13) and the base (14) of the metal housing (10) are encapsulated with plastic (20) in the region in which they abut against one another.

10. Fuel pump according to Claim 8 or 9, **characterized in that** the encapsulation (21) with plastic (20) exhibits detent hooks (22) or projections for the fastening of the metal housing (10).

## Revendications

1. Pompe à carburant comportant un boîtier (21), dans laquelle au moins un étage de pompe (4) destiné à entraîner du carburant, un moteur électrique (6), constitué d'un stator (8) et d'un rotor (7) disposé sur un arbre (5), l'arbre (5) entraînant l'au moins un étage de pompe (4), et une électronique de pompe (11) destinée à réguler la pompe à carburant (1), sont disposés dans le boîtier (21), dans laquelle l'électronique de pompe (11) est disposée dans un boîtier métallique (10) constitué d'un fond (14) et d'un capot (13), lequel boîtier métallique est disposé dans le boîtier (21) de la pompe à carburant (1), dans laquelle le capot (13) et le fond (14) du boîtier métallique (10) sont reliés l'un à l'autre de manière hermétique, dans laquelle le fond (14) possède des ouvertures (19) dans lesquelles sont disposées des bornes électriques (18),
**caractérisée en ce que** les bornes électriques (18) sont rendues étanches par de la matière plastique (20) par rapport aux ouvertures (19) à des fins de protection vis-à-vis du carburant, dans laquelle les ouvertures (19) du fond (14) sont respectivement entourées par un estampage annulaire (22), dans laquelle les régions des estampages annulaires (22) présentent une plus faible épaisseur que le fond (14) et **en ce que** la matière plastique (20) est disposée jusque dans la région de l'estampage (22).

2. Pompe à carburant selon la revendication 1, **caractérisée en ce que** l'électronique de pompe (11) comporte un substrat sur lequel sont agencés les composants de l'électronique de pompe (11) et **en ce que** les bornes électriques (18) sont reliées au substrat.

3. Pompe à carburant selon la revendication 1, **caractérisée en ce que** les bornes électriques (18) font partie de l'électronique de pompe (11).

4. Pompe à carburant selon au moins l'une des revendications précédentes, **caractérisée en ce que** chaque borne électrique (18) est agencée dans une ouverture (19) respective.

5. Pompe à carburant selon au moins l'une des revendications précédentes, **caractérisé en ce que** la matière plastique (20) avec laquelle les bornes électriques (18) sont rendues étanches par rapport aux ouvertures (19) est une matière plastique moulée par injection.

6. Pompe à carburant selon au moins l'une des revendications précédentes, **caractérisée en ce que** les bornes électriques (18) présentent une longueur supérieure à l'épaisseur du fond (14) et présentent une section transversale agrandie ou réduite sur leur longueur dans la région du fond (14).

7. Pompe à carburant selon au moins l'une des revendications précédentes, **caractérisée en ce que** le capot (13) et le fond (14) du boîtier métallique (10) sont brasés ou soudés.

8. Pompe à carburant selon au moins l'une des revendications précédentes, **caractérisée en ce que** le capot (13) et le fond (14) du boîtier métallique (10) sont enrobés de matière plastique (20).

9. Pompe à carburant selon la revendication 8, **caractérisée en ce que** le capot (13) et le fond (14) du boîtier métallique (10) sont enrobés de matière plastique (20) dans la région dans laquelle ils viennent en butée l'un contre l'autre.

10. Pompe à carburant selon la revendication 8 ou 9, **caractérisée en ce que** l'enrobage (21) de matière plastique (20) comporte des ergots d'encliquetage (22) ou des saillies permettant de fixer le boîtier métallique (10).
